# EUROPEAN PATENT SPECIFICATION

(11) **EP 3 595 257 B1**
(45) Date of publication and mention of the grant of the patent: **30.12.2020**
(21) Application number: 18305923.7
(22) Date of filing: 10.07.2018
(51) Int. Cl.: H04L 29/06

(54) **DETECTING SUSPICIOUS SOURCES, E.G. FOR CONFIGURING A DISTRIBUTED DENIAL OF SERVICE MITIGATION DEVICE**
DETEKTION VERDÄCHTIGER QUELLEN, Z. B. ZUR KONFIGURIERUNG EINER VERTEILTEN ABSCHWÄCHUNGSVORRICHTUNG FÜR DENIAL-OF-SERVICE
DÉTECTION DES SOURCES SUSPECTE, PAR EXEMPLE POUR CONFIGURER UN DISPOSITIF D'ATTÉNUATION DE DÉNI DE SERVICE

(43) Date of publication of application: 15.01.2020
(73) Proprietor: Nokia Solutions and Networks Oy, 02610 Espoo (FI)
(72) Inventor: WAISBARD, Erez, Ramat-Gan (IL); EINZIGER, Gil, Kfar Sava 4588000 (IL)
(74) Representative: Loyer & Abello

(56) References cited:
- WO-A1-2006/104752
- US-A1- 2015 161 398
- YIN ZHANG ET AL: "Online identification of hierarchical heavy hitters", PROCEEDINGS OF THE 2004 ACM SIGCOMM INTERNET MEASUREMENT CONFERENCE. IMC 2004. TAORMINA, SICILY, ITALY, OCT. 25 - 27, 2004; [PROCEEDINGS OF THE ACM SIGCOMM INTERNET MEASUREMENT CONFERENCE. IMC], NEW YORK, NY : ACM, US, 25 October 2004 (2004-10-25), pages 101-114, XP058319696, DOI: 10.1145/1028788.1028802 ISBN: 978-1-58113-821-4

## Description

### Field

The disclosure relates to methods and apparatuses for detecting suspicious sources, i.e. sources of traffic likely to be involved in Distributed Denial of Service (DDoS) attacks. Aspects of the disclosure also relate to mitigation of Distributed Denial of Service (DDoS) attacks, and in particular to methods and apparatuses for configuring a mitigation device intended to mitigate DDoS attacks.

### Background

A network, such as the Internet, allows users of the network to access the resources of a datacenter. A distributed denial-of-service (DDoS) attack is an attempt to make resources of the datacenter unavailable to the users. A DDoS attack is performed in a concerted effort by multiple computers or connected devices to prevent a targeted site or service of the datacenter from functioning efficiently. A common attack involves saturating the target machine with external communications requests, such that it cannot respond to legitimate traffic, or such that it responds so slowly that the target is effectively unavailable to legitimate traffic.

The attacking devices are typically ordinary connected devices that are infected with a malware, e.g. a computer virus, that allows the attacker to utilize them as a botnet. The legitimate owners of attacking devices are usually unaware that their devices are used for attacks. As personal computers become more secure by applying frequent security updates and security tools, DDoS attacks still increase volume by exploiting security vulnerabilities of Internet-of-Things devices. Thus, there is a need for methods capable of protecting important infrastructure from DDoS attacks.

Patent application US 2015/161398 A1 discloses a method and a system to prevent DDOS attacks by modeling them, based on analysis of traffic logs. An organization may apply less scrutiny to packets coming from an IP because the number of attacks coming from this IP against other organizations was low.

### Summary

According to the invention, the disclosure provides a method for detecting suspicious sources, e.g. for configuring a DDoS mitigation device, such as e.g. a firewall, an edge router or other appliances having a traffic filtering function. The method is defined in claim 1.

Aspects of the disclosure stem from the observation that it is difficult to discover during a DDoS attack exactly which transactions belong to attackers and which are part of the legitimate traffic. Aspects of the disclosure are based on the idea of forming a list of transaction sources (i.e. attackers) to be used by a DDoS mitigation device to block the attacking traffic. Aspects of the disclosure focus on identifying suspicious sources that appear in the traffic logs of a plurality of attacks, using the police rule that if a suspect was spotted in several crime scenes then he is likely to be guilty.

In some example embodiments, such a method may further comprise one or more of the features below.

In an example embodiment, the method further comprises configuring the DDoS mitigation device as a function of the determined transaction sources. In an example embodiment, the method further comprises configuring the DDoS mitigation device to filter out transactions that originate from the determined transaction sources.

For such method, a plurality of traffic logs recorded during several different DDoS attacks must be available. DDoS attacks can be considered different for they occurred at different instants in time and/or for they targeted different sites or services. In other words, the method can be implemented with traffic logs recorded over time at a single network element, with the condition that some time has elapsed between successive attacks, such that they can be considered to be different attacks. Preferably the method can be implemented with traffic logs recorded at a plurality of independent network elements at one time or at different times. In an example embodiment, the traffic logs are recorded in a plurality of Internet service provider domains.

In an example embodiment, the method further comprises performing a secure multiparty computation method to determine the transaction sources that appear in a number of traffic logs higher than the defined threshold. Thanks to these features, a certain level of confidentiality may be preserved between the legitimate owners of the different traffic logs, e.g. different Internet service providers, while determining the intersections between the traffic logs in terms of transactions sources.

In an example embodiment, the method further comprises performing a Heavy Hitter algorithm to determine the transaction sources that appear in a number of traffic logs higher than the defined threshold. Heavy Hitter algorithms make it possible to detect many recurring instances of attackers in a space efficient manner. Thanks to these features, a memory consumption of the correlation operation may be reduced, e.g. by limiting a number of different counters actually employed to count the occurrences of transaction sources in the different traffic logs.

In an example embodiment, the method further comprises:
for each respective traffic log, generating a respective non-repetitive list containing the transaction sources that appear in said traffic log, and
performing the Heavy Hitter algorithm to count the transaction sources that appear the most in the respective non-repetitive lists.

According to the invention, the disclosure also provides a computer program according to claim 13.

In some example embodiments, the disclosure also provides a computer-implemented method for detecting suspicious sources, e.g. for configuring a DDoS mitigation device, comprising:
accessing a plurality of traffic logs recorded at one or more network elements during a plurality of DDoS attacks,
correlating the traffic logs to determine transaction sources that appear in a number of traffic logs higher than a defined threshold, and
providing a list of suspicious sources comprising the determined transaction sources, e.g. for configuring the DDoS mitigation device as a function of the determined transaction sources.

According to the invention, the disclosure also provides an apparatus, e.g. a configuration apparatus for configuring a distributed denial of service (DDoS) mitigation apparatus according to claim 7

In some example embodiments, such configuration apparatus may comprise one or more of the features below.

In some example embodiments the apparatus further comprises means for configuring a DDoS mitigation device as a function of the determined transaction sources. In some example embodiments the means for configuring configure the DDoS mitigation device to filter out transactions that originate from the determined transaction sources.

In some example embodiments the means for correlating further comprise means for performing a secure multiparty computation method configured to determine the transaction sources that appear in a number of traffic logs higherthan the defined threshold.

In some example embodiments the means for correlating further comprise means for performing a Heavy Hitter algorithm configured to determine the transaction sources that appear in a number of traffic logs higher than the defined threshold.

In some example embodiments the means for correlating further comprise: means for generating a respective non-repetitive list containing the transaction sources that appear in a respective traffic log, for each said traffic log, and
and the means for performing the Heavy Hitter algorithm are configured to count the transaction sources that appear the most in the respective non-repetitive lists.

In some example embodiments, the disclosure also provides an apparatus comprising means for performing:
accessing a plurality of traffic logs recorded at one or more network elements during a plurality of DDoS attacks, wherein a traffic log comprises source information relating to transaction sources from which transactions received by a said network element during a said DDoS attack originate,
correlating the traffic logs to determine transaction sources that appear in a number of traffic logs higher than a defined threshold, and providing a list of suspicious sources comprising the determined transaction source.

In some example embodiments, the means are further configured to perform:
configuring a DDoS mitigation device as a function of the determined transaction sources, e.g. configuring the DDoS mitigation device to filter out transactions that originate from the determined transaction source.

In some example embodiments, the means are further configured to perform:
performing a secure multiparty computation method to determine the transaction sources that appear in a number of traffic logs higher than the defined threshold.

In some example embodiments, the means are further configured to perform:
performing a Heavy Hitter algorithm to determine the transaction sources that appear in a number of traffic logs higher than the defined threshold.

In some example embodiments, the means are further configured to perform:
for each respective traffic log, generating a respective non-repetitive list containing the transaction sources that appear in said traffic log, and
performing the Heavy Hitter algorithm to count the transaction sources that appear the most in the respective non-repetitive lists.

In some example embodiments, the means in the apparatus further comprises at least one processor; and at least one memory including computer program code, the at least one memory and computer program code configured to, with the at least one processor, cause the performance of the apparatus.

In some example embodiments, the disclosure also provides an apparatus, e.g. a configuration apparatus, comprising at least one processor and at least one memory including computer program code. The at least one memory and the computer program code may be configured to, with the at least one processor, cause the apparatus to:
access a plurality of traffic logs recorded at one or more network elements during a plurality of DDoS attacks, wherein a traffic log comprises source information relating to transaction sources from which transactions received by a said network element during a said DDoS attack originate,
correlate the traffic logs to determine transaction sources of that appear in a number of traffic logs higher than a defined threshold, and
provide a list of suspicious sources comprising the determined transaction source.

The at least one memory and the computer program code may be configured to, with the at least one processor, cause the apparatus to configure a DDoS mitigation device as a function of the determined transaction sources, e.g. configure the DDoS mitigation device to filter out transactions that originate from the determined transaction sources.

Accessing the traffic logs may be performed in a number of different ways. E.g. the traffic logs may be stored in a data storage of the apparatus after being downloaded or received from one or more logging devices, e.g. located in one or more Internet service provider domains. The traffic logs or portions thereof may also be accessed through a communication network without being downloaded to a data storage of the apparatus.

The at least one memory and the computer program code may be further configured to, with the at least one processor, cause the apparatus to perform a secure multiparty computation method configured to determine the transaction sources that appear in a number of traffic logs higher than the defined threshold.

Thanks to these features, a certain level of confidentiality may be preserved between the legitimate owners of the different traffic logs, e.g. different Internet service providers, while determining the intersections between the traffic logs in terms of transactions sources.

The at least one memory and the computer program code may be further configured to, with the at least one processor, cause the apparatus to perform a Heavy Hitter algorithm configured to determine the transaction sources that appear in a number of traffic logs higher than the defined threshold.

Thanks to these features, a memory consumption of the correlation operation may be reduced, e.g. by limiting a number of different counters actually employed to count the occurrences of transaction sources in the different traffic logs.

For that purpose, the at least one memory and the computer program code may be further configured to, with the at least one processor, cause the apparatus at least to:
generate a respective non-repetitive list containing the transaction sources that appear in a respective traffic log, for each said traffic log, and
perform the Heavy Hitter algorithm are configured to count the transaction sources that appear the most in the respective non-repetitive lists.

Configuring the DDoS mitigation device may be performed in a number of different ways. E.g. a list of suspicious transaction sources, e.g. identified by IP addresses, port numbers or other data, may be uploaded to a memory of the DDoS mitigation device or made available on a server for the DDoS mitigation device to download it.

In some example embodiments, the disclosure also provides an apparatus comprising:
access circuitry configured to access a plurality of traffic logs recorded at one or more network elements during a plurality of DDoS attacks, wherein a traffic log comprises source information relating to transaction sources from which transactions received by a said network element during a said DDoS attack originate,
correlation circuitry configured to correlate the traffic logs to determine transaction sources of that appear in a number of traffic logs higher than a defined threshold, and
configuration circuitry to configure a DDoS mitigation device as a function of the determined transaction sources.

In an example embodiment, the correlation circuitry is further configured to perform at least one of:
performing a secure multiparty computation method configured to determine the transaction sources that appear in a number of traffic logs higher than the defined threshold, and
performing a Heavy Hitter algorithm configured to determine the transaction sources that appear in a number of traffic logs higher than the defined threshold.

In an example embodiment, a non-transitory computer readable medium comprising program instructions for causing an apparatus to perform at least the following:
accessing a plurality of traffic logs recorded at one or more network elements during a plurality of DDoS attacks, wherein a traffic log comprises source information relating to transaction sources from which transactions received by a said network element during a said DDoS attack originate,
correlating the traffic logs to determine transaction sources that appear in a number of traffic logs higher than a defined threshold, and
providing a list of suspicious sources comprising the determined transaction source e.g. for configuring a DDoS mitigation device as a function of the determined transaction sources.

### Brief description of the drawings

These and other aspects of the invention will be apparent from and elucidated with reference to example embodiments described hereinafter, by way of example, with reference to the drawings.
Figure 1 is a functional representation of a communication network in which an ongoing DDoS attack is being logged by a network element.
Figure 2 is a functional representation of a system comprising a configuration apparatus in accordance with an example embodiment and a mitigation device in accordance with an example embodiment.
Figure 3 is a flow chart of a method that may be executed by the configuration apparatus of Fig. 2.
Figure 4 is a flow chart of a method that may be executed by the configuration apparatus of Fig. 2 in accordance with another example embodiment.
Figure 5 is a schematic representation of traffic logs.
Figure 6 is a functional diagram of a programmed computer in which example embodiments of the invention may be implemented.

### Detailed description of the embodiments

Embodiments of apparatuses and methods for detecting suspicious sources and configuring a DDoS mitigation device will now be described. The DDoS mitigation device may be implemented in a firewall, an edge router or other appliances having a traffic filtering function.

Devices participating in a DDoS attack are often victims of a malware that uses them for malicious activity without alerting the legitimate user of the device. Once such a botnet infrastructure is set, it can be used by a party having control over the malware to trigger attacks against selected network elements or services. This results in a situation in which attacking devices participate in multiple seemingly unrelated DDoS attacks. This means that identifying devices that send traffic during multiple DDoS attacks makes it possible to mark them as likely to belong to a botnet. Assuming that the set of attacking devices is relatively constant, knowledge from previous attacks can be used to form a list of suspected attackers and enable network devices to mitigate DDoS attacks by blocking the attacking traffic. This mode of operation will be described in further details below.

The observation underlying this mode of operation is that botnet devices are likely to participate in many DDoS attacks targeting unrelated services.

Three steps can be done offline for configuring mitigation devices to mitigate a DDoS attack:
- a collection step, in which multiple DDoS attacks are identified and logged at one or more network elements.
- a correlation step, in which DDoS attack traces recorded at the one or more network elements are correlated to identify devices that appear in several traces. The goal of this step is to generate a suspicious list,
- a configuration step, in which the suspicious list can be deployed to configure filters in DDoS mitigation devices.

Once a further DDoS attack is detected, such DDoS mitigation device mitigates it by blocking transactions originating from sources appearing on the suspicious list.

### Traffic logs

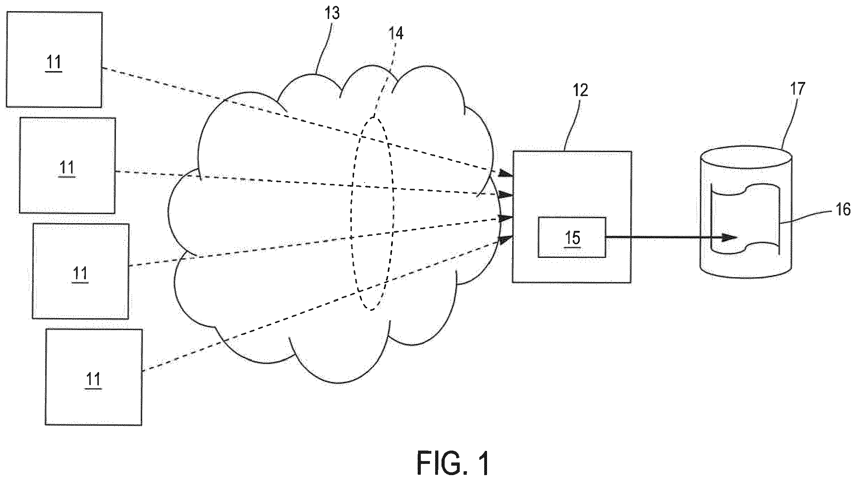

Fig. 1 illustrates a DDoS attack performed by multiple client systems 11 targeting a datacenter 12, e.g. a web server, through a communication network 13. The DDoS attack consists of massive amounts of transactions 14, e.g. HTTP requests or other.

In the collection step, a logging device 15 records packet traces or traffic samples during the attack to generate a traffic log 16. The logging device 15 may be implemented in a load balancer, an edge router, an application server, a firewall or any suitable network element within the datacenter 12 or within an Internet Service Provider (ISP) domain that datacenter 12 belongs to.

More precisely, the logging device 15 detects a DDoS attack using rate detection methods, e.g. in response to detecting a sudden unexpected peak in transactions to a certain address or service, e.g. 10 times to 10⁴ times the normal traffic. Typically, this peak may be caused by many sources sending traffic to a single or a few IP addresses. The logging device 15 records the packet traces as long as the attack is active or during a representative portion of the attack. Namely, the traffic log will be used to identify sources that participate in the attack. For that purpose, it may be sufficient to record traces of the transactions for a certain period of time which is long enough for receiving at least one transaction all or most of the attacking client systems 11.

The logging device 15 stores the traffic log 16 in a traffic log repository 17. The traffic log 16 comprises a trace of the attacking systems 11 as a set of machine identifiers, where machine identifiers can be source IP addresses, port numbers and source IP addresses or any other combination of the packet header fields that makes it possible to characterize an attacking client system 11. For example, the traffic log may further comprise protocol identifiers, payload size or other packet header fields.

It is noted that several traffic logs 16 may be generated and stored by the logging device 15 during different DDoS attacks, i.e. attacks suffered at different instants in time and/or attacks targeting different components or services of datacenter 12.

Preferably, the above described step will be performed by a plurality of datacenters, preferably in different ISP domains, so that a large number of attacks targeting unrelated services and/or machines can be recorded in a similar manner. For privacy reasons, the traffic logs preferably identify only those transaction sources, e.g. IP addresses, who sent traffic to the attacked service during the attack. As this is a relatively rare event, only a small portion of the total legitimate traffic to a given service is likely to be recorded.

### Configuration method

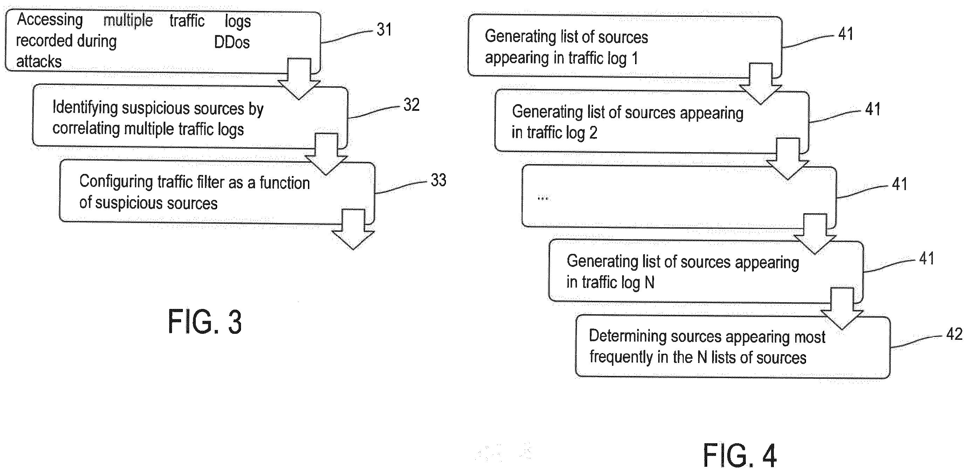

The traffic logs 16 are a prerequisite for performing a configuration method illustrated in Fig. 3.

The method comprises:
- A step 31 of accessing multiple traffic logs 16 recorded during multiple DDoS attacks
- A step 32 of identifying suspicious transaction sources by correlating the traffic logs 16
- A step 33 of configuring a traffic filter as a function of the suspicious transaction sources.

The rationale for the correlation step is that most DDoS attacks originate from well-established botnets. Hence, after a certain number of such DDoS attacks, i.e. as many as possible, are recorded in traffic logs 16, the botnet members are likely to appear in many traffic logs 16. This observation makes it possible to generate a suspicious list by correlating the traffic logs and identifying the transaction sources that appear in a large number of different traffic logs 16. In contrast, legitimate users of the services and/or network elements that were monitored at the collection step are included in an attack trace only by chance and thus the likelihood of them appearing in many traffic logs 16 is low. Hence, transaction sources corresponding to legitimate users are unlikely to be included in the suspicious list. In particular, legitimate users are all the more unlikely to appear in many attack traces as the attacked services were different and unrelated.

Services are considered unrelated if their legitimate users are different and show little overlap. A practical method of testing how unrelated two services are is to compare two of their peacetime logs (without a DDoS attack) and examine how many common source IP addresses exist in their intersection. In order to avoid false detections, the criteria for marking a source as suspicious, i.e. minimal number of traffic logs in which the transaction source must be found, is set as a function of the peacetime intersections of the traffic logs, e.g. using a higher threshold when the peacetime intersections of the traffic logs amount to a higher ratio.

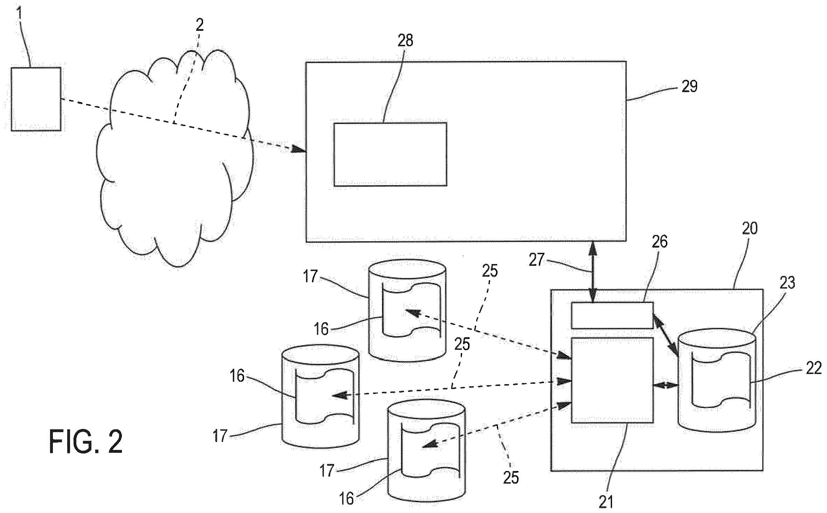

Fig. 2 illustrates a configuration apparatus 20 suitable for performing the configuration method of Fig. 3. The configuration apparatus 20 comprises a correlation application, circuitry, computer, apparatus and/or server 21 that accesses a plurality of traffic logs 16, preferably a large number thereof, as shown by arrows 25, to determine the transaction sources that appear in a large number of different traffic logs 16 and stores a suspicious list 22 containing machine identifiers identifying those transaction sources.

The configuration apparatus 20 may further comprise a configuration application, circuitry, computer, apparatus and/or server 26 that provides the suspicious list 22, as shown by arrow 27, to a mitigation device 29 for configuring a traffic filter application, circuitry, computer, apparatus and/or server 28.

Access to the traffic logs 16 may be implemented in different manners. For example, the traffic logs 16 may be copied to a shared data repository, e.g. data repository 23 of configuration apparatus 20 that the correlation application, circuitry, computer, apparatus and/or server 21 can access without any restriction. For example, if all the traffic logs 16 and the configuration apparatus 20 are under the administrative control of a single entity, e.g. an ISP, such unrestricted access to the traffic logs is straightforward.

Even if traffic logs 16 recorded by different entities, e.g. different ISPs are used, such unrestricted access may be possible. Indeed, ISPs often have a certain degree of collaboration as is manifested by the BGP protocol which allows peer routing. Such routing is used to reflect agreements where one ISP backs up another in case of an error or an attack. Therefore, some degree of trust is assumed to exist between ISPs.

Alternatively, when traffic logs 16 recorded by different entities, e.g. different ISPs are to be used, confidentiality requirements may have to be taken into account that would prevent copying the traffic logs 16 to a shared data repository.

At the correlation step, the correlation application, circuitry, computer, apparatus and/or server 21 compares the machine identifiers appearing in the traffic logs to determine, for all of the transaction sources or for some of the transaction sources, a number *ntl* of different traffic logs 16 (i.e. a number of different attack traces) in which a given transaction source appears. Then the correlation application, circuitry, computer, apparatus and/or server 21 can compare the number *ntl* to a given threshold T and place the machine identifiers of transactions sources that overtake the threshold in the suspicious list 22. In other words, those transaction sources that appear at the intersection of more than T traffic logs 16 are considered as suspected botnets.

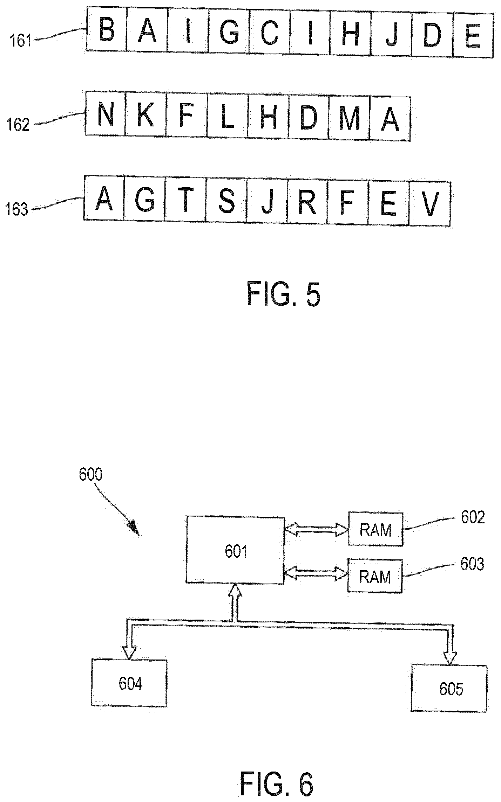

Fig. 5 illustrates three traffic logs 161, 162, 163 in a very simplified manner. Each capital letter represents a machine identifier corresponding to a transaction source. For example if the threshold T is 2, only machine identifier A will be written in the suspicious list because it is the only one to appear in all three traffic logs.

The threshold may be defined in different manners. In an embodiment, the threshold is user-defined. In an embodiment, the threshold is defined as a function of a statistical distribution of the numbers *ntl.* E.g. the threshold is defined so as to select a predefined number of the transaction sources or a predefined percentage of the transaction sources.

It will be appreciated that an exact computation of the number *nlt* for each and every transaction source appearing in each and every traffic log 16 may involve a very large amount of memory. Indeed, an exact table that maintains the number of intersections per machine id exactly may require a lot of memory space when the typical number of transaction sources per traffic log is several millions or billions.

Therefore, computational techniques can be employed to compute an estimate of the numbers *ntl* with reduced memory usage. In particular, algorithms known as Heavy Hitter (HH) Algorithm can count in how many traffic log intersections the most frequent machine identifiers appear using a total number of counters that is much lower than the total number of transaction sources appearing in the traffic logs. A HH algorithm requires a modest amount of space but maintains the number of intersections approximately.

HH algorithms can provide efficient calculation of the suspicious list 22 identifying suspected botnets. Their efficiency involves both memory space efficiency and computational efficiency, so that intersections can be calculated in a timely manner.

Fig. 4 illustrates a Heavy Hitter algorithm adapted to that purpose. It is assumed that N different traffic logs 16 are available, where N is a positive integer number. In step 41, each traffic log 16 is read to extract a non-repetitive list containing the machine identifiers that appear in the traffic log 16. "Non-repetitive" means that a machine identifier that appears more than one time in a traffic log 16 will appear only once in the resulting non-repetitive list. Step 41 is performed separately for each of the N traffic logs 16.

In step 42, an HH algorithm can be employed as if the N non-repetitive list were N data streams in which the most frequent talkers must be identified. By using a number of counters M much lower than the total number of traffic sources, the M most frequent machine identifiers in the non-repetitive lists can be identified and the number of intersections can be approximately estimated for each of those M most frequent machine identifiers. Hence, memory space and storage costs can be reduced by employing approximate computations based on HH algorithms.

As indicated, sharing traffic logs 16 may expose a lot of sensitive information, e.g. from an ISP domain. Hence the correlation step may be performed with secure calculation techniques that can determine traffic log intersections while preserving the privacy of each traffic log owner. For example, secure multiparty computation techniques allow finding the traffic log intersections without revealing the complete list of devices that were logged during the attack. In that case, accesses 25 to traffic logs 16 will involve encrypted transactions between the configuration apparatus 20 and the log repositories 17 where the traffic logs 16 are kept.

Such secure computation can enhance the capability of ISPs to collaborate and share data. Therefore, whether or not there is a certain level of trust between different traffic log owners, e.g. different ISPs, they can collaborate to better mitigate DDoS attacks using the methods disclosed herein above.

### Traffic filter configuration

Once the suspicious list 22 has been obtained by the methods described herein above, it may be postprocessed to remedy obvious errors. E.g. the suspicious list 22 could be compared to a predefined white list, which defines transaction sources benefiting from a high level of trust. If such trusted source is found by chance in the suspicious list 22, it could be deleted at the postprocessing step.

Finally, as shown by arrow 27 the suspicious list 22 can be simply integrated in mitigation devices 29 having a traffic filtering function, e.g. routers, load balancers or firewalls. Specifically, a suspicious list can be implemented using existing 'match and action' rules which are supported by many Software-defined Network (SDN) controllers.

The configuration step can be implemented in different manners, e.g. by directly uploading the suspicious list 22 to one or more mitigation devices 29, e.g. to a predefined list of subscribing devices, or by uploading the suspicious list 22 to an application server, from which subscribing devices will be able to download it as a security update at any time.

To perform the DDoS mitigation step, the DDoS mitigation device is preferably in a default sleep state, and it switches to an active state in response to detection of a DDoS attack. In the sleep state, the traffic filtering function associated to the suspicious list 22 is inactive. Hence traffic originating from compromised devices infected with the malware that are likely to appear on the suspicious list 22 still goes through in peaceful times. It becomes only blocked when an attack has been detected and the DDoS mitigation device has switched to the active state. The reason for not blocking these addresses when there is no attack is that these devices are typically compromised devices of legitimate users who use them for legitimate uses.

In addition, the suspicious list can be employed to detect botnets of compromised devices, which their owners have no idea that they take part in DDoS attacks. These devices are connected to the Internet and take part in attacks when instructed remotely by the hacker. Thus, it can be used to block such devices when a subsequent attack starts or even to alert their owners.

As illustrated in Fig. 2, when the mitigation device 29 receives a flow of transactions 2 from one or more attacking devices 1, it is able to discard such flow in response to detecting that the attacking device(s) 1 is/are found in the suspicious list. Hence, network elements or data systems (not shown) located downstream of mitigation device 29 are protected from DDoS attacks originating from attacking devices 1.

The above described methods rely on traffic logs that can be obtained for all kinds of transactions on different protocols, e.g. HTTP, TCP and UDP traffic. Hence They can mitigate a wide variety of attacks, for example also SYN flood attacks.

By taking into account more and more traffic logs (i.e. as many previous DDoS attacks) over time, the accuracy and exhaustivity of the method can continuously improve over time. The methods disclosed herein may be employed in a long-term perspective to map botnets and over time eliminate their capability to perform new DDoS attacks.

Since the preparation of the suspicious lists can be done offline, in peaceful times and is not required to be very fast, the methods described herein are practical and relatively easy to implement.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Elements such as the configuration apparatus and its components could be or include e.g. hardware means like e.g. an Application-Specific Integrated Circuit (ASIC), or a combination of hardware and software means, e.g. an ASIC and a Field-Programmable Gate Array (FPGA), or at least one microprocessor and at least one memory with software modules located therein, e.g. a programmed computer.

Figure 6 shows a functional diagram of a programmed computer, server, circuitry, or apparatus 600 that may be used for that purpose. Computer 600 has a core and several peripherals connected via a communication bus. The major components of the core are a microprocessor 601 (often called the CPU) random access memory (RAM) 602 and read only memory (ROM) 603. The peripherals comprise devices that allow information to be input to the system from users, output to users and stored and retrieved (mass storage devices 604 such as hard disks and network interfaces 605).

The invention is not limited to the described example embodiments, but only to the scope of the claims.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The example embodiments may be implemented by means of hardware as well as software. The same item of hardware may represent several "means".

In the claims, any reference signs placed between parentheses shall not be construed as limiting the scope of the claims.

## Claims

1. A method for detecting suspicious sources, comprising:
accessing (31) a plurality of traffic logs (16) recorded at one or more network elements during a plurality of DDoS attacks, wherein a traffic log comprises source information relating to transaction sources from which transactions received by a said network element during a said DDoS attack originate,
accessing a plurality of peacetime traffic logs recorded at said one or more network elements during a period of time without said DDoS attacks, wherein a peacetime traffic log comprises source information relating to transaction sources from which transactions received by a said network element during said period of time originate,
examining intersections of the peacetime traffic logs to determine a ratio of transaction sources found in the intersections, and defining a threshold as a function of said ratio, so that the threshold is higher when said ratio of transaction sources is higher,
correlating (32) the traffic logs (16) to determine transaction sources that appear in a number of traffic logs (16) higher than the defined threshold, and
providing a list (22) of suspicious sources comprising the determined transaction sources.

2. The method of claim 1, further comprising configuring a DDoS mitigation device (29) to filter out transactions that originate from the determined transaction source.

3. The method of claim 1 or 2, wherein the traffic logs are recorded in a plurality of Internet service provider domains.

4. The method of any one of claims 1 to 3, further comprising performing a secure multiparty computation method to determine the transaction sources that appear in a number of traffic logs higher than the defined threshold.

5. The method of any one of claims 1 to 3, further comprising performing a Heavy Hitter algorithm to determine the transaction sources that appear in a number of traffic logs higher than the defined threshold.

6. The method of claim 5, further comprising:
for each respective traffic log, generating (41) a respective non-repetitive list containing the transaction sources that appear in said traffic log, and
performing (42) the Heavy Hitter algorithm to count the transaction sources that appear the most in the respective non-repetitive lists.

7. An apparatus (20) comprising:
means (21) for accessing a plurality of traffic logs (16) recorded at one or more network elements during a plurality of DDoS attacks, wherein a traffic log (16) comprises source information relating to transaction sources from which transactions received by a said network element during a said DDoS attack originate,
means (21) for accessing a plurality of peacetime traffic logs recorded at said one or more network elements during a period of time without said DDoS attacks, wherein a peacetime traffic log comprises source information relating to transaction sources from which transactions received by a said network element during said period of time originate,
means (21) for examining intersections of the peacetime traffic logs to determine a ratio of transaction sources found in the intersections, and defining a threshold as a function of said ratio, so that the threshold is higher when said ratio of transaction sources is higher,
means (21) for correlating the traffic logs (16) to determine transaction sources of that appear in a number of traffic logs (16) higher than a defined threshold, means (26) for providing a list of suspicious sources comprising the determined transaction sources.

8. The apparatus of claim 7, further comprising means (26) for configuring a DDoS mitigation device as a function of the determined transaction sources, wherein the means for configuring (26) configure the DDoS mitigation device (29) to filter out transactions that originate from the determined transaction sources.

9. The apparatus of claim 7 or 8, wherein the traffic logs (16) are recorded in a plurality of Internet service provider domains.

10. The apparatus of any one of claims 7 to 9, further comprising means (21) for performing a secure multiparty computation method configured to determine the transaction sources that appear in a number of traffic logs higher than the defined threshold.

11. The apparatus of any one of claims 7 to 9, further comprising means (21) for performing a Heavy Hitter algorithm configured to determine the transaction sources that appear in a number of traffic logs higher than the defined threshold.

12. The apparatus of claim 11, further comprising:
means for generating (41) a respective non-repetitive list containing the transaction sources that appear in a respective traffic log, for each said traffic log, and
wherein the means for performing the Heavy Hitter algorithm are configured to count (42) the transaction sources that appear the most in the respective non-repetitive lists.

13. A computer program comprising executable code for causing an apparatus to perform at least:
accessing (31) a plurality of traffic logs (16) recorded at one or more network elements during a plurality of DDoS attacks, wherein a traffic log (16) comprises source information relating to transaction sources from which transactions received by a said network element during a said DDoS attack originate,
accessing a plurality of peacetime traffic logs recorded at said one or more network elements during a period of time without said DDoS attacks, wherein a peacetime traffic log comprises source information relating to transaction sources from which transactions received by a said network element during said period of time originate,
examining intersections of the peacetime traffic logs to determine a ratio of transaction sources found in the intersections, and defining a threshold as a function of said ratio, so that the threshold is higher when said ratio of transaction sources is higher,
correlating (32) the traffic logs (16) to determine transaction sources that appear in a number of traffic logs (16) higher than a defined threshold, and
providing a list of suspicious sources comprising the determined transaction sources.

14. The computer program of claim 13, wherein the executable code is for causing the apparatus to further perform:
performing (32) a secure multiparty computation method configured to determine the transaction sources that appear in a number of traffic logs higher than the defined threshold.

15. The computer program of claim 13, wherein the executable code is for causing the apparatus to further perform:
performing (32) a Heavy Hitter algorithm configured to determine the transaction sources that appear in a number of traffic logs higher than the defined threshold.

## Patentansprüche

1. Verfahren zum Detektieren von verdächtigen Quellen, das Folgendes umfasst:
Zugreifen (31) auf eine Vielzahl von Verkehrsprotokollen (16), die während einer Vielzahl von DDoS-Angriffen an einem oder mehreren Netzwerkelementen aufgezeichnet werden, wobei ein Verkehrsprotokoll Quellinformationen umfasst, die Transaktionsquellen betreffen, in denen Transaktionen, die von einem Netzwerkelement während eines DDoS-Angriffs empfangen werden, ihren Ursprung haben,
Zugreifen auf eine Vielzahl von Friedenszeitverkehrsprotokollen, die während einer Zeitperiode ohne die DDoS-Angriffe an dem einen oder den mehreren Netzwerkelementen aufgezeichnet werden, wobei ein Friedenszeitverkehrsprotokoll Quellinformationen umfasst, die Transaktionsquellen betreffen, in denen Transaktionen, die während der Zeitperiode von dem Netzwerkelement empfangen werden, ihren Ursprung haben,
Untersuchen von Überschneidungen der Friedenszeitverkehrsprotokolle, um einen Anteil von Transaktionsquellen, die in den Überschneidungen gefunden werden, zu bestimmen, und Definieren eines Schwellwerts als eine Funktion des Anteils, derart, dass der Schwellwert höher ist, wenn das Verhältnis von Transaktionsquellen höher ist,
Korrelieren (32) der Verkehrsprotokolle (16), um Transaktionsquellen zu bestimmen, die in einer Anzahl von Verkehrsprotokollen (16) erscheinen, die höher ist als der definierte Schwellwert, und
Bereitstellen einer Liste (22) von verdächtigen Quellen, die die bestimmten Transaktionsquellen umfasst.

2. Verfahren nach Anspruch 1, das ferner das Auslegen einer DDoS-Abschwächungsvorrichtung (29) umfasst, um Transaktionen herauszufiltern, die ihren Ursprung in den bestimmten Transaktionsquellen haben.

3. Verfahren nach Anspruch 1 oder 2, wobei die Verkehrsprotokolle in einer Vielzahl von Internetdienstanbieterdomänen aufgezeichnet werden.

4. Verfahren nach einem der Ansprüche 1 bis 3, das ferner das Durchführen eines sicheren Mehrparteienberechnungsverfahrens umfasst, um die Transaktionsquellen zu bestimmen, die in einer Anzahl von Verkehrsprotokollen erscheinen, die höher ist als der definierte Schwellwert.

5. Verfahren nach einem der Ansprüche 1 bis 3, das ferner das Durchführen eines Heavy-Hitter-Algorithmus umfasst, um die Transaktionsquellen zu bestimmen, die in einer Anzahl von Verkehrsprotokollen erscheinen, die höher ist als der definierte Schwellwert.

6. Verfahren nach Anspruch 5, das ferner Folgendes umfasst:
Erzeugen (41) einer jeweiligen nichtrepetitiven Liste, die die Transaktionsquellen enthält, die in dem Verkehrsprotokoll erscheinen, für jedes jeweilige Verkehrsprotokoll und
Durchführen (42) des Heavy-Hitter-Algorithmus, um die Transaktionsquellen zu zählen, die am häufigsten in den jeweiligen nichtrepetitiven Listen erscheinen.

7. Einrichtung (20), die Folgendes umfasst:
ein Mittel (21) zum Zugreifen auf eine Vielzahl von Verkehrsprotokollen (16), die während einer Vielzahl von DDoS-Angriffen an einem oder mehreren Netzwerkelementen aufgezeichnet werden, wobei ein Verkehrsprotokoll (16) Quellinformationen umfasst, die Transaktionsquellen betreffen, in denen Transaktionen, die von einem Netzwerkelement während eines DDoS-Angriffs empfangen werden, ihren Ursprung haben,
ein Mittel (21) zum Zugreifen auf eine Vielzahl von Friedenszeitverkehrsprotokollen, die während einer Zeitperiode ohne die DDoS-Angriffe an dem einen oder den mehreren Netzwerkelementen aufgezeichnet werden, wobei ein Friedenszeitverkehrsprotokoll Quellinformationen umfasst, die Transaktionsquellen betreffen, in denen Transaktionen, die während der Zeitperiode von dem Netzwerkelement empfangen werden, ihren Ursprung haben,
ein Mittel (21) zum Untersuchen von Überschneidungen der Friedenszeitverkehrsprotokolle, um einen Anteil von Transaktionsquellen, die in den Überschneidungen gefunden werden, zu bestimmen, und Definieren eines Schwellwerts als eine Funktion des Anteils, derart, dass der Schwellwert höher ist, wenn das Verhältnis von Transaktionsquellen höher ist,
ein Mittel (21) zum Korrelieren der Verkehrsprotokolle (16), um Transaktionsquellen zu bestimmen, die in einer Anzahl von Verkehrsprotokollen (16) erscheinen, die höher ist als ein definierter Schwellwert,
ein Mittel (26) zum Bereitstellen einer Liste von verdächtigen Quellen, die die bestimmten Transaktionsquellen umfasst.

8. Einrichtung nach Anspruch 7, die ferner ein Mittel (26) zum Auslegen einer DDoS-Abschwächungsvorrichtung als eine Funktion der bestimmten Transaktionsquellen umfasst, wobei das Mittel zum Auslegen (26) die DDoS-Abschwächungsvorrichtung (29) auslegt, um Transaktionen herauszufiltern, die ihren Ursprung in den bestimmten Transaktionsquellen haben.

9. Einrichtung nach Anspruch 7 oder 8, wobei die Verkehrsprotokolle (16) in einer Vielzahl von Internetdienstanbieterdomänen aufgezeichnet werden.

10. Einrichtung nach einem der Ansprüche 7 bis 9, die ferner ein Mittel (21) zum Durchführen eines sicheren Mehrparteienberechnungsverfahrens umfasst, das dazu ausgelegt ist, die Transaktionsquellen zu bestimmen, die in einer Anzahl von Verkehrsprotokollen erscheinen, die höher ist als der definierte Schwellwert.

11. Einrichtung nach einem der Ansprüche 7 bis 9, die ferner ein Mittel (21) zum Durchführen eines Heavy-Hitter-Algorithmus umfasst, der dazu ausgelegt ist, die Transaktionsquellen zu bestimmen, die in einer Anzahl von Verkehrsprotokollen erscheinen, die höher ist als der definierte Schwellwert.

12. Einrichtung nach Anspruch 11, die ferner Folgendes umfasst:
ein Mittel zum Erzeugen (41) einer jeweiligen nichtrepetitiven Liste, die die Transaktionsquellen enthält, die in einem jeweiligen Verkehrsprotokoll erscheinen, für jedes Verkehrsprotokoll und
wobei das Mittel zum Durchführen des Heavy-Hitter-Algorithmus dazu ausgelegt ist, die Transaktionsquellen zu zählen (42), die am häufigsten in den jeweiligen nichtrepetitiven Listen erscheinen.

13. Computerprogramm, das ausführbaren Code zum Bewirken, dass eine Einrichtung mindestens Folgendes durchführt, umfasst:
Zugreifen (31) auf eine Vielzahl von Verkehrsprotokollen (16), die während einer Vielzahl von DDoS-Angriffen an einem oder mehreren Netzwerkelementen aufgezeichnet werden, wobei ein Verkehrsprotokoll (16) Quellinformationen umfasst, die Transaktionsquellen betreffen, in denen Transaktionen, die von einem Netzwerkelement während eines DDoS-Angriffs empfangen werden, ihren Ursprung haben,
Zugreifen auf eine Vielzahl von Friedenszeitverkehrsprotokollen, die während einer Zeitperiode ohne die DDoS-Angriffe an dem einen oder den mehreren Netzwerkelementen aufgezeichnet werden, wobei ein Friedenszeitverkehrsprotokoll Quellinformationen umfasst, die Transaktionsquellen betreffen, in denen Transaktionen, die während der Zeitperiode von dem Netzwerkelement empfangen werden, ihren Ursprung haben,
Untersuchen von Überschneidungen der Friedenszeitverkehrsprotokolle, um einen Anteil von Transaktionsquellen, die in den Überschneidungen gefunden werden, zu bestimmen, und Definieren eines Schwellwerts als eine Funktion des Anteils, derart, dass der Schwellwert höher ist, wenn das Verhältnis von Transaktionsquellen höher ist,
Korrelieren (32) der Verkehrsprotokolle (16), um Transaktionsquellen zu bestimmen, die in einer Anzahl von Verkehrsprotokollen (16) erscheinen, die höher ist als ein definierter Schwellwert, und
Bereitstellen einer Liste von verdächtigen Quellen, die die bestimmten Transaktionsquellen umfasst.

14. Computerprogramm nach Anspruch 13, wobei der ausführbare Code dem Bewirken, dass die Einrichtung ferner Folgendes durchführt, dient:
Durchführen (32) eines sicheren Mehrparteienberechnungsverfahrens, das dazu ausgelegt ist, die Transaktionsquellen zu bestimmen, die in einer Anzahl von Verkehrsprotokollen erscheinen, die höher ist als der definierte Schwellwert.

15. Computerprogramm nach Anspruch 13, wobei der ausführbare Code dem Bewirken, dass die Einrichtung ferner Folgendes durchführt, dient:
Durchführen (32) eines Heavy-Hitter-Algorithmus, der dazu ausgelegt ist, die Transaktionsquellen zu bestimmen, die in einer Anzahl von Verkehrsprotokollen erscheinen, die höher ist als der definierte Schwellwert.

## Revendications

1. Procédé pour détecter des sources suspectes, comprenant :
l'accès (31) à une pluralité de journaux de trafic (16) enregistrés au niveau d'un ou plusieurs éléments de réseau pendant une pluralité d'attaques DDoS, où un journal de trafic comprend des informations de source relatives à des sources de transaction desquelles proviennent les transactions reçues par un dit élément de réseau pendant une dite attaque DDoS,
l'accès à une pluralité de journaux de trafic de temps de paix enregistrés au niveau desdits un ou plusieurs éléments de réseau pendant une période de temps sans lesdites attaques DDoS, où un journal de trafic de temps de paix comprend des informations de source relatives à des sources de transaction desquelles proviennent les transactions reçues par un dit élément de réseau pendant ladite période de temps,
l'examen d'intersections des journaux de trafic de temps de paix pour déterminer un rapport de sources de transaction trouvées dans les intersections, et la définition d'un seuil en fonction dudit rapport, de sorte que le seuil soit supérieur lorsque ledit rapport de sources de transaction est supérieur,
la corrélation (32) des journaux de trafic (16) pour déterminer des sources de transaction qui apparaissent dans un nombre de journaux de trafic (16) supérieur au seuil défini, et
la fourniture d'une liste (22) de sources suspectes comprenant les sources de transaction déterminées.

2. Procédé selon la revendication 1, comprenant en outre la configuration d'un dispositif d'atténuation DDoS (29) pour éliminer par filtrage des transactions qui proviennent de la source de transaction déterminée.

3. Procédé selon la revendication 1 ou 2, dans lequel les journaux de trafic sont enregistrés dans une pluralité de domaines de fournisseur de services Internet.

4. Procédé selon l'une quelconque des revendications 1 à 3, comprenant en outre l'exécution d'un procédé de calcul multipartie sécurisé pour déterminer les sources de transaction qui apparaissent dans un nombre de journaux de trafic supérieur au seuil défini.

5. Procédé selon l'une quelconque des revendications 1 à 3, comprenant en outre l'exécution d'un algorithme Heavy Hitter pour déterminer les sources de transaction qui apparaissent dans un nombre de journaux de trafic supérieur au seuil défini.

6. Procédé selon la revendication 5, comprenant en outre :
pour chaque journal de trafic respectif, la génération (41) d'une liste non répétitive respective contenant les sources de transaction qui apparaissent dans ledit journal de trafic, et
l'exécution (42) de l'algorithme Heavy Hitter pour compter les sources de transaction qui apparaissent le plus dans les listes non répétitives respectives.

7. Appareil (20) comprenant :
des moyens (21) pour accéder à une pluralité de journaux de trafic (16) enregistrés au niveau d'un ou plusieurs éléments de réseau pendant une pluralité d'attaques DDoS, où un journal de trafic (16) comprend des informations de source relatives à des sources de transaction desquelles proviennent les transactions reçues par un dit élément de réseau pendant une dite attaque DDoS,
des moyens (21) pour accéder à une pluralité de journaux de trafic de temps de paix enregistrés au niveau desdits un ou plusieurs éléments de réseau pendant une période de temps sans lesdites attaques DDoS, où un journal de trafic de temps de paix comprend des informations de source relatives à des sources de transaction desquelles proviennent les transactions reçues par un dit élément de réseau pendant ladite période de temps,
des moyens (21) pour examiner des intersections des journaux de trafic de temps de paix pour déterminer un rapport de sources de transaction trouvées dans les intersections, et définir un seuil en fonction dudit rapport, de sorte que le seuil soit supérieur lorsque ledit rapport de sources de transaction est supérieur,
des moyens (21) pour corréler les journaux de trafic (16) pour déterminer des sources de transaction qui apparaissent dans un nombre de journaux de trafic (16) supérieur à un seuil défini,
des moyens (26) pour fournir une liste de sources suspectes comprenant les sources de transaction déterminées.

8. Appareil selon la revendication 7, comprenant en outre des moyens (26) pour configurer un dispositif d'atténuation DDoS en fonction des sources de transaction déterminées, où les moyens pour configurer (26) configurent le dispositif d'atténuation DDoS (29) pour éliminer par filtrage des transactions qui proviennent des sources de transaction déterminées.

9. Appareil selon la revendication 7 ou 8, dans lequel les journaux de trafic (16) sont enregistrés dans une pluralité de domaines de fournisseur de services Internet.

10. Appareil selon l'une quelconque des revendications 7 à 9, comprenant en outre des moyens (21) pour exécuter un procédé de calcul multipartie sécurisé configuré pour déterminer les sources de transaction qui apparaissent dans un nombre de journaux de trafic supérieur au seuil défini.

11. Appareil selon l'une quelconque des revendications 7 à 9, comprenant en outre des moyens (21) pour exécuter un algorithme Heavy Hitter configuré pour déterminer les sources de transaction qui apparaissent dans un nombre de journaux de trafic supérieur au seuil défini.

12. Appareil selon la revendication 11, comprenant en outre :
des moyens pour générer (41) une liste non répétitive respective contenant les sources de transaction qui apparaissent dans un journal de trafic, pour chaque dit journal de trafic, et
dans lequel les moyens pour exécuter l'algorithme Heavy Hitter sont configurés pour compter (42) les sources de transaction qui apparaissent le plus dans les listes non répétitives respectives.

13. Programme informatique comprenant un code exécutable pour amener un appareil à effectuer au moins :
l'accès (31) à une pluralité de journaux de trafic (16) enregistrés au niveau d'un ou plusieurs éléments de réseau pendant une pluralité d'attaques DDoS, où un journal de trafic (16) comprend des informations de source relatives à des sources de transaction desquelles proviennent les transactions reçues par un dit élément de réseau pendant une dite attaque DDoS,
l'accès à une pluralité de journaux de trafic de temps de paix enregistrés au niveau desdits un ou plusieurs éléments de réseau pendant une période de temps sans lesdites attaques DDoS, où un journal de trafic de temps de paix comprend des informations de source relatives à des sources de transaction desquelles proviennent les transactions reçues par un dit élément de réseau pendant ladite période de temps,
l'examen d'intersections des journaux de trafic de temps de paix pour déterminer un rapport de sources de transaction trouvées dans les intersections, et la définition d'un seuil en fonction dudit rapport, de sorte que le seuil soit supérieur lorsque ledit rapport de sources de transaction est supérieur,
la corrélation (32) des journaux de trafic (16) pour déterminer des sources de transaction qui apparaissent dans un nombre de journaux de trafic (16) supérieur à un seuil défini, et
la fourniture d'une liste de sources suspectes comprenant les sources de transaction déterminées.

14. Programme informatique selon la revendication 13, dans lequel le code exécutable est destiné à amener l'appareil à effectuer en outre :
l'exécution (32) d'un procédé de calcul multipartie sécurisé configuré pour déterminer les sources de transaction qui apparaissent dans un nombre de journaux de trafic supérieur au seuil défini.

15. Programme informatique selon la revendication 13, dans lequel le code exécutable est destiné à amener l'appareil à effectuer en outre :
l'exécution (32) d'un algorithme Heavy Hitter configuré pour déterminer les sources de transaction qui apparaissent dans un nombre de journaux de trafic supérieur au seuil défini.
